Europäisches Patentamt

European Patent Office

Office européen des brevets

(11) Publication number: **0 079 782**
**B1**

(12) **EUROPEAN PATENT SPECIFICATION**

(45) Date of publication of patent specification: **04.02.87**

(21) Application number: **82306052.0**

(22) Date of filing: **12.11.82**

(51) Int. Cl.⁴: **A 01 N 59/12**

(54) Stabilized iodine-containing germicidal preparation.

(30) Priority: **16.11.81 US 321738**
**09.11.82 US 440408**

(43) Date of publication of application:
**25.05.83 Bulletin 83/21**

(45) Publication of the grant of the patent:
**04.02.87 Bulletin 87/06**

(84) Designated Contracting States:
**AT BE CH DE FR GB IT LI LU NL SE**

(56) References cited:
**CH-A- 506 295**
**FR-A-2 258 867**
**US-A-2 759 869**
**US-A-2 977 315**
**US-A-2 989 434**

(73) Proprietor: **Euroceltique SA**
**122 Boulevard De La Petrusse**
**Luxembourg (LU)**

(72) Inventor: **Nash, Robert Arnold**
**10 Capri Drive**
**Spring Valley New York 10977 (US)**
Inventor: **Iny, Oliver**
**246-03 Cullman Avenue**
**Little Neck New York 11362 (US)**

(74) Representative: **Lamb, John Baxter et al**
**MARKS & CLERK 57/60 Lincoln's Inn Fields**
**London WC2A 3LS (GB)**

Courier Press, Leamington Spa, England.

## Description

This invention is concerned with improvements in and relating to stabilized organic iodine-containing germicidal preparations which may be used in the presence of high bio-organic loads.

In the course of certain pre-operative and post-operative procedures it is necessary to provide a means for the drainage of body tissue exudates and other organic fluids. Such drainage involves the insertion of a catheter into the body cavity or replaced after varying periods of time of drainage collection. The length of time during which such drainage catheters are utilized will vary from the indeterminant period for the urinary incontinent patient to the short-transition interval of the operative period when purulent material is drained. Such drainage materials usually comprise a high bio-organic load which is frequently contaminated with infectious micro-organisms so that microbicidal degerming is a necessary procedure to protect both the patient and attending hospital and nursing staff. Unfortunately, the tissue exudates with high bio-organic load present serious problems since germicides are inactivated by the organic matter, enzymes and inorganic salt content of these drainage systems.

The catheterized urinary tract is the most common site for infections while the patient is in a hospital, and urinary tract infections account for approximately 30% of hospital nosocomial infections. While an improvement in the diminution of catheter-associated bacteria has been achieved by the utilization of closed, sterile drainage collection systems, the problem remains of serious concern to the clinician and the patient.

It has been found that a significant number of patients with in-dwelling catheters continue to acquire urinary tract infection and the microbial contamination of the urine drainage collection bag has been frequently observed to occur prior to the onset of a bladder bacteremia. The use of suitable germicidal agents which are administered prophylactically to the patient in an effort to delay the onset of bacteria has not been successful in preventing these infections because many of these systemic antimicrobial agents are toxic and therefore may not be used for long-term routine prophylaxis.

It has been shown that bacterial contamination of the urine drainage collection bag, which has been established to be a common source of bacteria associated with catheterization, may be eliminated by adding hydrogen peroxide to the collecting container. However, hydrogen peroxide, which is a strong oxidizing agent, enters into secondary chemical reactions with the organic matter of urine and the container. This presents considerable limitations on the routine germicidal use of hydrogen peroxide in such collecting systems.

Hydrogen peroxide also has a serious limitation when used as a germicide in the presence of biologic matters containing such enzymes as catalyse or peroxidase. These enzymes cause an inactivation of the hydrogen peroxide by releasing gaseous, nascent oxygen into the atmosphere, with the formation of inert water. The urine collected in the course of the post-surgical and/or medical management of genito-urinary pathology frequently contains blood and pus and microbial flora, all of which carry the peroxidase enzymes to render peroxide germicides inert. The use of such germicides consequently requires frequent multiple additions of peroxide agents which not only increases nursing costs, but also presents the patient with the threat of microbicidal failure through enzyme inactivation of the peroxide germicidal systems. Moreover, it has been shown that certain microorganisms may be resistant to hydrogen peroxide germicidal action which consequently provide a still further patient threat as well as new epidemiological problems.

After the surgical intervention for the treatment of gallbladder disease, bile drainage is a frequent necessity. In many instances this drainage fluid is contaminated and presents a toxic hazard for the patient and attending staff. The usual germicides are not satisfactory because of the chemical properties of the bile salts in this drainage fluid which react to degrade the germicidal system. When hydrogen peroxide is used as a germicide for a gallbladder drainage system, the bile salts are highly chemical reactive with peroxides to render the germicidal effect of hydrogen peroxide worthless.

Following certain chest procedures drainage catheters are inserted to drain the chest cavity. These chest collection systems involve the common hazard of microbial contamination and also because of reflux of the exudates into the sensitive chest cavity, containing the vital organs, serious patient threat results. The use of antiseptics to degerm such drainage systems is severely limited because of the inherent toxic nature of the germicide to these sensitive organs, and also because of the presence of the high bio-organic load of these exudates which serves to neutralize and destroy the conventional germicides.

When the above drainage fluids comprise blood and other tissue exudates, the incidence of infection is materially increased since such organic composition of these fluids is an excellent medium for microbial growth.

Of the antiseptic agents utilized for environmental degerming, iodine is considered to be one of the best antimicrobial agents because of its broad spectrum rapid microbicidal action against every species of microorganism. However, elemental iodine is a strong, corrosive, oxidizing halogen which interacts with many substances. Elemental iodine stains skin and natural fibres as well as most surface materials. The tissue irritative properties of elemental iodine presents another serious threat to its use with patients. Because iodine has a high vapour pressure, it poses the problem of refluxing iodine vapours from a urine collecting bag into the genito-urinary system to cause local tissue damage.

The development of iodiphor germicidal preparations eliminated many of the noxious toxic chemical properties of elemental iodine without affecting its germicidal efficacy. The class of organic iodophor

**0 079 782**

compounds consists of two distinct groups; the first is the non-detergent, iodine-containing organic germicidal preparations of which polyvinylpyrrolidone-iodine (hereinafter for convenience referred to as "povidone-iodine" or "PVPI") is the only member and the second group consists of compounds prepared from a variety of detergent, surface-active agents and iodine. This latter group of detergent iodophor compounds are useful for environmental degerming such as occurs in urine collecting bags. This group of germicidal compounds includes such iodophor detergent compounds as nonylphenoxypoly-(ethyleneoxy)-ethanol iodine and undecoylium chloride iodine.

Detergent-iodophor compounds may be formed by combining iodine with an anionic, cationic or nonionic detergent compound. An example of nonionic detergent suitable for forming an iodophor compound is a polyglycol ether-type, surface active compound, well known in the art. (See United States Patents Nos. 1,970,578 and 2,213,447). Other nonionic surfactants that may be used to prepare iodophors are disclosed in United States Patent No. 2,674,619.

Anionic detergents also form iodophor compounds, and surface-active agents such as alkanoyl taurates and alkylaryl sulphonates, such as for example alkyl benzene sodium sulphonates and alkyl naphthyl sodium sulphonates, may be combined with iodine to form such anionic iodophors.

When a cationic detergent is desired to be used as an iodide carrier, then well known cationic surfactant compounds, such as for example the quaternary ammonium salts such formed by the alkylation of fatty amines and straight chain fatty amine salts having from 8 to 18 carbon atoms in chain length (e.g. octadecyl amine; amino amides and imidazolines), may be used.

The detergent iodophor group possesses common disadvantages for use in urine collection systems in that the surface tension reduction, because of the detergent content, gives rise to massive foam formation which tend to clog catheters. While germicidal activity is satisfactory for these surfactant iodophors, this physical property of foam formation make these agents somewhat less preferred.

Of the general class of iodophor germicidal preparations, povidone-iodine is the preferred degerming compound because this organic iodine germicide has a low systemic toxicity and it is essentially non-irritating to mammalian tissues while acting as a broad-spectrum germicidal agent with non-selective antimicrobial activity. It is effective in dilute solutions and has been established to be active against bacteria, fungi, virus, spores, amoeba and nematodes.

However, it is known that all iodophor preparations are not stable in the alkaline pH range. Solutions of povidone-iodine described in compendious literature all carry the caution that the pH of such solutions must not exceed pH 6.

It has already been proposed to add acids, such as hydrochloric, phosphoric and hydroxycarboxylic acids, to iodophor preparations as disclosed in U.S. Patents Specifications Nos. 2759869, 2977315 and 2989434 and French Patent Specification No. 2258867. The inactivation of iodophor germicidal activity in the alkaline pH range is especially important to the use of these agents in urine collection systems because the microbial action on urea liberates ammonia to result in a strong alkaline chemical reaction.

It is a primary object of the present invention to provide for the stabilization of iodine-containing germicidal preparations even in the presence of large amounts of bio-organic matter.

It is another object of the present invention to provide for the stabilization of iodophor compositions so that the same can be used in connection with in-dwelling catheters and gallbladder drainage collection vessels.

It is another object of the present invention to provide for the stabilization of iodophor compositions so that the same can be used in connection with catheters inserted to provide a drainage system to the chest cavity and abdominal cavity.

It is another object of the present invention to provide for the stabilization of iodophor compositions so that the same can be used in connection with in-dwelling catheters for body cavity, wherein the drainage fluid comprises blood, tissue exudate and other serous materials, to degerm the collected fluids.

It is another object of the present invention to provide for stabilized aqueous iodine-coating solutions which retain germicidal iodine even in the presence of large amounts of urine, blood, bile and other tissue exudates.

According to the present invention there is provided a germicidal composition for use in the presence of bio-organic matter and comprising an organic iodine-containing germicide together with a stabilizing amount of an acid component which is maleic acid or maleic acid together with hydrochloric acid and/or phosphoric acid; the pH of the system preferably not exceeding about 3.

While it is known that iodophor preparations are not stable in the alkaline pH range, attempts to avoid the lack of stability thereof when used in connection with urine collecting bags by the acidification of the bag contents for the purpose of controlling the developing alkalinity in the body exudate collecting container were not successful in attempting to avoid the loss of iodine potency of the iodophor solution at alkaline pH. Thus, for example, the acidification of the urine with strong acids has been found to cause the formation of precipitates when the iodophor is added thereto. Accordingly, this cannot be used as a means of avoiding the loss of iodine potency of iodophor solutions in urine collection bags and the like systems with a high bio-organic load.

We have attempted to avoid the problem of loss of iodine potency of iodophor solutions at alkaline pH by the addition of an acid to the aqueous iodine solutions prior to the mixing thereof with the drained body exudate. However, quite surprisingly it was found that the addition of the acid to the aqueous iodine

3

**0 079 782**

solutions is effective only in the case of hydrochloric acid, maleic acid, or phosphoric acid, or mixtures thereof. Thus, aqueous iodine solutions were prepared to contain about 2.0% titratable iodine and strong acids, such as for example, acetic acid, citric acid, hydrochloric acid, lactic acid, maleic acid, phosphoric acid, succinic acid and tartaric acid. Urine which is a common body drainage fluid and typifies the high bio-organic load of such drainage fluids was used as a representative test material to demonstrate the value of the present invention.

Exactly 400 ml. of pooled urine was mixed with 30 ml. of the resulting iodophor solutions, agitated thoroughly to obtain a homogeneous mixture and assayed for available iodine content. The urine-iodophor-acid mixture was permitted to stand for at least 8 hours and was reassayed for physical appearance, pH and iodine content. The values obtained after standing were then compared with the initial data (see Table 1 below).

All of the acids used, except hydrochloric acid, phosphoric acid and maleic acid caused a marked drop in the initial iodine value immediately after the addition of the iodophor compound. These acids have a pKa value of less than 2 whereas the other strong acids have a pKa value greater than 2. Within a matter of 5 to 10 minutes a loss of approximately 50 mg to 150 mg of available iodine was observed. The iodine levels for hydrochloric acid alone or in admixture with phosphoric acid were virtually unchanged, whereas only a small iodine loss was observed for the maleic acid systems.

There was a strong iodine odor with the hydrochloric acid mixture to reflect the formation of elemental iodine with high vapour pressure which was not present in the other preparations.

The values obtained with the various acids which were tested are set forth in Table 1 below.

TABLE 1

The effectiveness of acidulants as stabilizers for povidone-iodine solutions in the presence of an organic urine biologic load

| Test mixture | Initial test data | | |
|---|---|---|---|
| | Total available Iodine/mg | pH at 25°C | Appearance |
| 400 ml urine+22% PVP-I +3% HCl | 345.0 | 2.5 | Dark brown solution with precipitate |
| 400 ml urine+22% PVP-I +3% $H_3PO_4$ | 347.0 | 3.7 | Dark brown solution with precipitate |
| 400 ml urine+22% PVP-I +3% maleic acid | 315.0 | 3.9 | Dark brown solution |
| 400 ml urine+22% PVP-I +3% tartaric acid | 297.0 | 3.9 | Dark brown solution |
| 400 ml urine+22% PVP-I +3% citric acid | 252.0 | 4.1 | Dark brown solution |
| 400 ml urine+22% PVP-I +3% lactic acid | 252.0 | 4.1 | Dark brown solution |
| 400 ml urine+22% PVP-I +3% succinic acid | 233.0 | 4.2 | Dark brown solution |
| 400 ml urine+22% PVP-I +3% acetic acid | 197.0 | 4.3 | Dark brown solution |
| 400 ml urine+22% PVP-I (no acid added) (control) | 74.0 | 4.8 | Reddish brown solution |
| 400 ml urine (control) | 0.0 | 5.9 | Pale yellow solution |

4

# 0 079 782

TABLE 1 (contd.)

| Test data after 8 hours at room temperature | | |
|---|---|---|
| Total available Iodine/mg | pH at 25°C | Appearance |
| 345.0 | 2.3 | Dark brown solution with precipitate |
| 58.9 | 3.3 | Reddish brown solution; free of precipitate |
| 43.7 | 3.5 | Reddish brown solution; free of precipitate |
| 0.0 | 3.6 | Pale yellow solution; free of precipitate |
| 0.0 | 3.7 | Pale yellow solution; free of precipitate |
| 0.0 | 3.8 | Pale yellow solution; free of precipitate |
| 0.0 | 4.0 | Pale yellow solution; free of precipitate |
| 0.0 | 4.0 | Pale yellow solution; free of precipitate |
| 0.0 | 4.6 | Pale yellow solution; free of precipitate |
| 0.0 | 5.8 | Pale yellow solution; free of precipitate |

Acidification with hydrochloric acid and phosphoric acid caused a copious precipitate to develop immediately after mixing. The presence of insoluble material limits the use of hydrochloric acid as an acidifying preservative for germicidal iodine since the separated insoluble matter may not only clog the catheter but could adsorb urine biocomponents to interfere with laboratory diagnostic testing. The precipitate formed with phosphoric acid dispersed and returned to solution on standing. There was no precipitate with the maleic acid preservative.

After incubation for 8 hours (at room temperature) only the hydrochloric acid, phosphoric acid and maleic acid systems still retained iodine in the solution. The remaining acidulated preparations were virtually colourless and without iodine content.

The preservative activity of strong acids was also explored with other iodophor preparations, as for example, the detergent-iodophor system, nonoxynol-10 iodine complex, which is known in the trade as Biopal® and marketed by the GAF Corporation, New York City, New York, and Lugol's Solution which is an aqueous solution of elemental iodine, prepared in accord with the monograph for Strong Iodine Solution of USP XX. Lugol's Solution, or Strong Iodine Solution, is an aqueous solution of elemental iodine which is prepared by dissolving one part by weight of iodine and two parts by weight of potassium iodide in 100 ml of water and then adding sufficient water to bring the volume to one litre.

When 400 ml of urine was mixed with 11% (w/v) of Biopal®, plus 3% (w/v) of the following acids, hydrochloric acid, phosphoric acid, maleic acid, tartaric acid and citric acid, a precipitate was immediately observed to form in the preparations containing hydrochloric acid, tartaric acid and citric acid. While there was initial transient precipitation after the addition of the phosphoric acid, this was soon reversed and it went into solution on standing. After the 8 hours of incubation, the Biopal-tartaric acid and the Biopal-citric acid preparations had virtually no detectable iodine-content, whereas the iodine content for Biopal preparations acidified with hydrochloric acid, phosphoric acid and maleic acid ranged from low to moderate amounts to indicate that effective germicidal activity was present despite the high urine bio-load (see Table II below).

5

**0 079 782**

When the Lugol's Solution (iodide-iodine aqueous solution) was studied by adding 400 ml of urine to a sufficient volume of aqueous iodine-iodide solution to provide 2.2% equivalent of titratable iodine and 3% (w/v) of a strong acid selected from the group of hydrochloric acid, phosphoric acid, maleic acid, tartaric acid and citric acid, only the hydrochloric acid-Lugol's Solution preparation was found to have moderate iodine content after 8 hours of incubation, although it did have a formed precipitate. The remaining other acid preparations had virtually no iodine content and no precipitate material (Table II). Thus, maleic acid which is useful to preserve organic iodophor germicides is not suitable to stabilize elemental inorganic iodine products. This response may be due to the iodination of the unsaturated bonds of maleic acid.

TABLE II

Effectiveness of acidulants as stabilizers for two iodophors in the presence of an organic urine biologic load

| Test preparation | Activity as measured by $I_2$ color* | Physical stability |
|---|---|---|
| Biopal series[a] | | |
| 400 ml urine+11% Biopal+3% HCl | ++ | ppt. |
| 400 ml urine+11% Biopal+3% $H_3PO_4$ | + | no ppt. |
| 400 ml urine+11% Biopal+3% maleic acid | + | no ppt. |
| 400 ml urine+11% Biopal+3% tartaric acid | — — | ppt. |
| 400 ml urine+11% Biopal+citric acid | — — | ppt. |
| | | |
| Iodide-Iodine series (Lugol's Sol.) | | |
| 400 ml urine+2.2% iodine+3% HCl | ++ | ppt. |
| 400 ml urine+2.2% iodine+3% $H_3PO_4$ | — — | no ppt. |
| 400 ml urine+2.2% iodine+3% maleic acid | — — | no ppt. |
| 400 ml urine+2.2% iodine+3% tartaric acid | — — | no ppt. |
| 400 ml urine+2.2% iodine+3% citric acid | — — | no ppt. |

\* ++ moderate, + low, − nil (pale yellow)
[a] nonoxynol-10 iodophor series.

Further examination of the general utility of strong acids as stabilizing agents for iodine-containing germicides in the presence of a urine load indicated that while other inorganic acids such as nitric acid and sulphuric acid may possess a stabilizing role to the available iodine content, these inorganic acids present other limitations which so seriously interfere with their use in urine-collection systems as to render these acids useless. Thus, for example, there is a strong vapour of elemental iodine present when nitric and sulphuric acids are used. The iodine vapours are apparent and iodine may reflux into the kidney from the urine collection system to be a potential source of injury as well as to injure the surrounding surfaces.

We have further found that maleic acid has preferred properties and can be used to stabilize the germicidal iodine content in the presence of a high urine biologic load even over periods as long as 8 hours, which is the maximum period before changing the urine collection bag when an in-dwelling catheter is used. Other organic acids such as acetic acid, citric acid, lactic acid, succinic acid and tartaric acid failed to stabilize the iodine content of the different iodine-containing germicides and therefore although closely related in chemical structure and chemical properties to maleic acid, these are essentially of no value.

In order to demonstrate the scope of utility for maleic acid as a stabilizing preservative for iodophor preparations used in degerming body exudate urine drainage collection bags, a series of solutions of maleic acid were prepared and mixed with 400 ml. of urine and a sufficient amount of povidone-iodine solution to provide 2% available iodine; the amount of maleic acid used was from 2% to 6% (w/v). The pH of these preparations was measured and the observations were made of the length of time wherein the iodine content was found to be present. The results of this study are shown in Table III.

The results of this test confirm that the addition of at least 2% maleic acid to an iodophor preparation is sufficiently capable of preserving iodine germicidal activity even when large amounts of urine are present to maintain an essentially germ-free sanitized urine pool. A concentration of 3% maleic acid is preferred and the use of additional amounts of maleic acid above 3% (w/v) does not improve the effective degerming

6

properties of the product. However, larger amounts of maleic acid may be found useful for special use conditions as for example when genito-urinary infection is present or significant bleeding occurs.

TABLE III

The range of efficacy of maleic acid in preserving iodophor potency in the presence of high urine bio-load

| Volume human urine | Amount +Iodine solution | Amount maleic acid added % (w/v) | Observation | Initial available iodine content | Residual available iodine content after 24 h study period |
|---|---|---|---|---|---|
| 400 ml | +60 ml | none (control) | No iodine colour after 24 h | 1.3 mg/ml | Nil |
| 400 ml | +45 ml | none (control) | No iodine colour after 12 h (pH 3.55) | 1.35 mg/ml | Nil |
| 400 ml | +30 ml | none (control) | No iodine colour after 8 h | 1.40 mg/ml | Nil |
| 400 ml | +30 ml | 2% | Slight iodine colour after 24 h (pH 2.95) | 1.40 mg/ml | <0.1 mg/ml |
| 400 ml | +30 ml | 3% | Good iodine colour after 24 h (pH 2.85) | 1.40 mg/ml | 0.5 mg/ml |
| 400 ml | +30 ml | 4% | Good iodine colour after 24 h (pH 2.65) | 1.40 mg/ml | 0.5 mg/ml |
| 400 ml | +30 ml | 6% | Good iodine colour after 24 h (pH 2.45) | 1.40 mg/ml | 0.5 mg/ml |

The impact of precipitate formation was explored and it was found that when phosphoric acid and/or hydrochloric acid is combined with the maleic acid, so that an effective concentration of these acids is equivalent to at least 2% by weight/volume of the combined acids, then immediate precipitation was avoided and effective iodine stabilization occurred.

When it is desired to stabilize an iodine-containing germicide solution in the presence of a high urine bio-load in order to sanitize the urine collected in the catheter drainage collection bag, then a germicidal solution may be prepared by dissolving 30 g of povidone-iodine USP in 80 g of purified water, adding 3 g of maleic acid and bringing the volume to 100 ml. Approximately 30 ml of this solution is added to the empty urine drainage collection bag and connected into the system. When urine samples are removed to determine the presence of microorganisms to demonstrate the efficacy of the system, even prior to emptying the bag after 8 hours of drainage, the urine will be found to be essentially sterile.

Over the usual 8 hour period that urine drains into the collection bag, the volume of fluid increases so that the stabilized iodophor germicide solution, as described herein, is at full iodine strength at the time the drainage period starts, but may be diluted to 4% of the original strength after 8 hours since the mean urine volume in the collection system after 8 hours is approximately 840 ml (average). The mean and standard deviation of urine volumes determined for 253 urine collection bags was 840 ml±450 ml with an average iodophor iodine germicide concentration after 8 hours of 30/840×100 or 4% of original strength.

The results of a controlled study of the microbicidal efficacy of an iodophor-maleic acid preserved collection system in 21 patients is reported in Table IV. The average volume of urine collected from the patients was 840 ml with a range of from 100 ml to 3430 ml. The microbial and pH testing of the collected urine was conducted in the usual manner and demonstrated the acid pH present throughout and that the available iodine content was preserved and was sufficient to maintain a virtually sterile urine collection environment during the entire catheterization and urine drainage period.

The pH of the urine in the collection bag averaged pH 3.6 with a range of from pH 2.2 to pH 4.3 over the entire study period, while the pH of the bladder urine was found to average pH 6.2 with a range of from pH 5.8 to pH 7.1 for the same period. Thus the maintenance of the acid pH reflects the excellent stabilizing properties of the new preparations. Results are reported in Table IV.

The microbiological testing conducted in accord with the methods known in the art, established that the urine samples taken from the urine collecting bags treated with the new preparations during 8 hours of urine drainage were essentially sterile in contrast to the presence of microorganisms such as yeast cells, *E. Coli* and *Pseudomonas aeruginosa* present in the control group where no stabilized iodine germicidal solution was added to the collection bag.

When a sample of bladder urine was obtained and microbiologically studied, two of the subjects Nos. 6 and 12, were found to have *E. Coli* present and *Pseudomonas mirabilis* in the bladder urine samples because of an upper urinary tract infection both these organisms were destroyed in the treated urine bag collecting system.

TABLE IV

Efficacy of stabilized iodine solution in maintaining a sterile environment in the urine collecting bag of 21 patients

| Random assignment subject number | Bag urine-vol. at each 8 h bag drainage (ml) | pH Bag urine | pH Bladder urine |
|---|---|---|---|
| Test group — 30 ml stabilized PVP-I solution added to bag | | | |
| 1 | 300 — 640 | 2.2 | 5.8 |
| 2 | 1120 — 1350 | 3.9 | 5.9 |
| 3 | 300 — 750 | 3.4 | 7.1 |
| 6 | 100 — 1050 | 3.8 | 6.3 |
| 7 | 500 — 1000 | 3.8 | 5.9 |
| 10 | 240 — 1000 | 3.4 | 5.9 |
| 11 | 500 — 800 | 4.3 | 5.8 |
| 12 | 260 — 1500 | 3.0 | 6.5 |
| 14 | 450 — 650 | 3.2 | 6.3 |
| 15 | 230 — 2020 | 3.7 | 6.2 |
| 17 | 240 — 1040 | 3.2 | 6.4 |
| 19 | 400 — 3430 | 4.0 | 6.5 |
| 21 | 360 — 1400 | 3.2 | 6.4 |
| Average: | | 3.6 | 6.2 |
| Control group — no PVP-I solution added to bag | | | |
| 4 | 550 — 2400 | 5.8 | 5.9 |
| 5 | 250 — 910 | 6.2 | 6.3 |
| 8 | 360 — 1000 | 6.8 | 6.7 |
| 9 | 240 — 1480 | 6.0 | 6.1 |
| 13 | 120 — 1240 | 6.0 | 6.0 |
| 16 | 100 — 780 | 5.3 | 5.2 |
| 18 | 450 — 2400 | 6.3 | 6.2 |
| 20 | 1780 — 2740 | 6.1 | 6.1 |
| Average: | 390 — 1290 | 6.0 | 6.0 |

**0 079 782**

TABLE IV (contd.)

| Bag urine max. No. cells/ml contaminant | Bladder urine max. No. cells/ml contaminant |
|---|---|
| Test group — 30 ml stabilized PVP-I solution added to bag | |
| Sterile | Sterile |
| Sterile | Sterile |
| Sterile | Sterile |
| Sterile | $10^3$E. Coli.* |
| Sterile | Sterile |
| Sterile | Sterile |
| Sterile | Sterile |
| Sterile | $10^3$P. Mirabilis* |
| Sterile | Sterile |
| Sterile | Sterile |
| Sterile | Sterile |
| Sterile | Sterile |
| Sterile | Sterile |
| Average: 0/13 | 2/13* |
| Control group — no PVP-I solution added to bag | |
| $10^4$ Yeast | Sterile |
| Sterile | Sterile |
| $10^3$E. Coli | $10^3$ E. Coli |
| Sterile | Sterile |
| $10^2$ P. Aeruginosa | Sterile |
| $10^5$ E. Coli | $10^5$ E. Coli |
| $10^8$ P. Aeruginoas | $10^5$ P. Aeruginosa |
| Sterile | Sterile |
| Average: 5/8 | 3/8 |

* Patient had $10^3$ cells/ml in bladder at time of initial catherization.

For the control group *E. coli* and *Pseudomonas aeruginosa* were found in bladder urine but no yeast cells; all of these were found in the urine collecting bag. This study clearly demonstrates that an iodine germicidal preparation stabilized with maleic acid is capable of rendering the urine in the catheter drainage collection bag germ-free thereby reducing the chance for infection during and after in-dwelling catheterization.

9

In a similar manner, the degerming of the fluid exudate drained post-operatively after surgical intervention in gallbladder disease is accomplished by adding to the container vessel a volume of from 10 ml to 40 ml of a stock iodophor germidical solution prepared by dissolving 30 g of povidone-iodine USP in 80 g of purified water and adding thereto from 1 g to 4 g of maleic acid and the volume brought to 100 ml.

In place of the povidone-iodine USP there may be substituted a sufficient quantity of the surfactant iodophor preparation nonoxynol iodine complex, in an amount sufficient to provide 2% (w/v) of titratable iodine or povidone iodine aqueous solution to provide 2% titratable iodine (w/v). For the preparation of all of these stock solutions, the concentration of maleic acid used will range from 1% to 4% (w/v) depending on the anticipated volume and bio-organic load of the particular exudate drainage fluid being collected.

The exact volume of the iodophor germicidal stock solution to be added to the fluid drainage vessel will depend on the bio-organic load and the volume of fluid to be degermed. If the volume is small and the organic load light, then a volume of about 10 ml of the selected stock solution is used, but when the drainage volume is large and the organic load high, then 40 ml of the stock solution is used to achieve degerming over an 8 hour period. The fluid volume of the drainage solution, as well as the degree of bio-organic load present is readily discernible to one trained in the art upon inspection of the vessel contents and detection of odour.

When the contents of the chest cavity drainage collection vessel is intended to be degermed, then a volume of between 20 ml and 40 ml of the iodophor germicidal stock solution prepared, as described above, is used. The presence of blood serous exudate and microbial contaminants will direct that the higher volume of 40 ml of the germicidal stock solution to be added to the container while lesser degrees of organic material evident in the drainage fluid will require the smaller amounts of stock solution.

While generally the same amounts of the iodophor maleic acid containing stock solution are used, as described above for urine bag degerming to degerm the contents of the vessel receiving the exudate from the gallbladder drainage systems and chest cavity drainage systems, it will be found that smaller amounts of the detergentiodophor active substance will be required. However, a preferred stock solution is one that is prepared to provide 2% (w/v) titratable iodine and to contain 3% of maleic acid (w/v) with a preferred volume of the stock solution to be added will be 30 ml added directly to the drainage fluid container to achieve an 8 hour effective degerming.

The following examples are given by way of illustration only.

Example 1

In a suitable glass container were placed 80 g of purified water and 20 g of povidone-iodine USP. The mixture was stirred until a solution was achieved and 3 g of maleic acid were added. When the maleic acid had dissolved, sufficient water was added to bring the volume to 100 ml thus forming a 20% solution of the iodophor germicide, povidone-iodine (w/v) and maleic acid 3% (w/v). Thirty (30) ml of this solution is then added to the body exudate drainage collection container in order to render the collection vessel contents virtually sterile over the common collection period of about 8 hours.

Example 2

In place of the povidone-iodine used in Example 1, there is added a sufficient quantity of a povidone-iodine aqueous solution to provide the equivalent amount of titratable iodine to the drainage collection vessel and 2% (w/v) of maleic acid are added to the povidone-iodine solution. The samples of the drainage contents obtained after 8 hours of drainage are virtually sterile.

Example 3

When a surfactant iodophor preparation is desired to be used to render germ-free the contents of the urine collection bag then the detergent iodophor, nonoxynol-iodine complex may be mixed with a sufficient amount of maleic acid to provide at least 2% (w/v) and the whole is dissolved in sufficient distilled water to provide 2% (w/v) titratable iodine. About 30 ml of this solution will be found sufficient to degerm the urine collected in the catheter drainage bags.

Example 4

When an iodophor germicidal preparation is desired to be used to degerm the contents of a urine collection bag, then 20 g of povidone-iodine USP are dissolved in about 90 g of purified water and 3 g of maleic acid added to this solution. Sufficient water is then added to bring the volume to 100 ml thus forming a 20% solution of the non-surfactant iodophor germicide povidone-iodine (w/v) and maleic acid 3% (w/v).

In place of the povidone-iodine USP described above there may be added a sufficient quantity of povidone-iodine aqueous solution to provide an equivalent amount of titratable iodine (2% w/v) to the urine drainage collection bag and 2% (w/v) of maleic acid is added to the povidone-iodine solution before adding to the urine drainage collection bag.

The urine samples obtained after 8 hours of urine drainage are virtually sterile when either povidone-iodine USP and maleic acid stock solution or povidone-iodine aqueous solution and maleic acid are used.

In place of the iodophor germicide povidone-iodine used to prepare the stock solution as described above, there is substituted a sufficient quantity of aqueous iodine solution which is described in the U.S. Pharmacopeia as Iodine Topical Solution or Strong Iodine Solution, to provide an equivalent iodine content to that obtained from the iodophor compound. An equivalent volume of the iodine stock solution to provide at least 2% titratable iodine and containing from 2% to 3% of maleic acid is added to the urine collection bag.

When 30 ml of this stock solution is added to the urine drainage collection bag, the contents of the collection bag remain virtually sterile over a common continuous collection period of about 8 hours.

Example 5

When it is desired to degerm the contents of a gallbladder drainage collection vessel, then between 10 ml and 40 ml of an iodine containing germicidal stock solution is prepared to contain 20% (w/v) of povidone-iodine USP nonoxynol-iodine complex, which is known in the art as Biopal, to provide at least 2% (w/v) of titratable iodine and from 1% to 4% of maleic acid (w/v).

Example 6

When it is desired to degerm the contents of the chest cavity drainage collection vessel then any of the germicidal stock solutions prepared as described in Examples 1 through 6 above containing either a non-surfactant or a surfactant or an aqueous iodine solution and maleic acid may be used. When the drainage exudate fluid contains a large proportion of blood then approximately 30 ml to 40 ml of the stock solution is used to degerm the drainage collection vessel contents but in the absence of a large amount of serous and bio-organic exudate, smaller amounts such as 20 ml of the iodine containing germicide stock solution will provide adequate degerming of the contents of the chest cavity drainage collection vessel.

Example 7

In place of the maleic acid used in Examples 1—7 above, there may be substituted, in part, hydrochloric acid and/or phosphoric acid in sufficient amounts such that the total amount of combined acids which is present in the iodophor solution, is not less than at least 2% (w/v).

**Claims for the Contracting States: BE, CH, DE, FR, GB, IT, LI, LU, NL, SE**

1. A germicidal composition for use in the presence of bio-organic matter and comprising an organic iodine-containing germicide, characterised in that it contains a stabilising amount of an acid component which is maleic acid or maleic acid together with hydrochloric acid and/or phosphoric acid.

2. A composition as claimed in claim 1 characterised in that it is in the form of an aqueous solution.

3. A composition as claimed in claim 1 or claim 2 characterised in that the acid component is present in an amount of at least 2% to volume.

4. A composition as claimed in claim 3 characterised in that the acid is present in an amount of from 2 to 6% by weight to volume.

5. A composition as claimed in claim 4 characterised in that the acid component is present in an amount of about 3% weight to volume.

6. A composition as claimed in any one of the preceding claims characterised in that the iodine-containing germicide is an iodophor.

7. A composition as claimed in claim 6 characterised in that the iodophor is polyvinyl-pyrrolidone-iodine.

8. A composition as claimed in claim 6 characterised in that the iodophor is a combination of iodine and a detergent compound.

9. A composition as claimed in any one of the preceding claims characterised in that it has a pH of not more than 3.

10. A method for the sterile collection of a body exudate in a drainage collection container, which comprises introducing into said container a composition as claimed in any one of the preceding claims.

11. A method as claimed in claim 10 in which the body exudate is urine.

**Claims for the Contracting State: AT**

1. A method for the preparation of a germicidal composition for use in the presence of bio-organic matter and comprising an organic iodine-containing germicide, characterised in that it comprises adding to the germicide a stabilising amount of an acid component which is maleic acid or maleic acid together with hydrochloric acid and/or phosphoric acid.

2. A method as claimed in claim 1 characterised in that the composition is in the form of an aqueous solution.

3. A method as claimed in claim 1 or claim 2 characterised in that the acid component is added so that it is present in an amount of at least 2% to volume.

4. A method as claimed in claim 3 characterised in that the acid is added so that it is present in an amount of from 2 to 6% by weight to volume.

11

5. A method as claimed in claim 4 characterised in that the acid component is added so that it is present in an amount of about 3% by weight to volume.

6. A method as claimed in any one of the preceding claims characterised in that the iodine-containing germicide is an iodophor.

7. A method as claimed in claim 6 characterised in that the iodophor is polyvinyl-pyrrolidone-iodine.

8. A method as claimed in claim 6 characterised in that the iodophor is a combination of iodine and a detergent compound.

9. A method as claimed in any one of the preceding claims characterised in that the acid-containing composition has a pH of not more than 3.

## Patentansprüche für die Vertragsstaaten: BE, FR, DE, GB, IT, LU, NL, SE, LI, CH

1. Keimtötende Zusammensetzung zur Verwendung in der Gegenwart von bioorganischem Material und umfassend ein organisches iodhältiges Germizid, dadurch gekennzeichnet, daß es eine stabilisierende Menge einer Säurekomponente enthält, die Maleinsäure oder Maleinsäure zusammen mit Chlorwasserstoffsäure und/oder Phosphorsäure ist.

2. Zusammensetzung nach Anspruch 1, dadurch gekennzeichnet, daß sie die Form einer wässerigen Lösung hat.

3. Zusammensetzung nach Anspruch 1 oder 2, dadurch gekennzeichnet, daß die Säurekomponente in einer Menge von mindestens 2 Gew.% pro Volumen enthalten ist.

4. Zusammensetzung nach Anspruch 3, dadurch gekennzeichnet, daß die Säure in einer Menge von 2 bis 6 Gew.% pro Volumen enthalten ist.

5. Zusammensetzung nach Anspruch 4, dadurch gekennzeichnet, daß die Säurekomponente in einer Menge von ungefähr 3 Gew.-% pro Volumen enthalten ist.

6. Zusammensetzung nach einem der vorhergehenden Ansprüche, dadurch gekennzeichnet, daß das iodhältige Germizid ein Iodophor ist.

7. Zusammenzetzung nach Anspruch 6, dadurch gekennzeichnet, daß das Iodophor Polyvinylpyrrolidon-Iod ist.

8. Zusammensetzung nach Anspruch 6, dadurch gekennzeichnet, daß das Iodophor eine Kombination aus Iod und einer Detergentverbindung ist.

9. Zusammensetzung nach einem der vorhergehenden Ansprüche, dadurch gekennzeichnet, daß sie einen pH-Wert von nicht mehr als 3 hat.

10. Verfahren zur sterilen Gewinnung eines Körperexsudats in einem Dränagesammelbehälter, bei dem Eine Zusammensetzung nach einem der vorhergehenden Ansprüche in den genannten Behälter eingeführt wird.

11. Verfahren nach Anspruch 10, bei dem das Körperexsudat Urin ist.

## Patentansprüche für den Vertragsstaat: AT

1. Verfahren zur Herstellung einer keimtötenden Zusammensetzung zur Verwendung in der Gegenwart von bioorganischem Material und umfassend ein organisches iodhältiges Germizid, dadurch gekennzeichnet, daß zum Germizid eine stabilisierende Menge einer Säurekomponente beigemischt wird, die Maleinsäure oder Maleinsäure zusammen mit Chlorwasserstoffsäure und/oder Phosphorsäure ist.

2. Verfahren nach Anspruch 1, dadurch gekennzeichnet, daß die Zusammensetzung die Form einer wässrigen Lösung hat.

3. Verfahren nach Anspruch 1 oder 2, dadurch gekennzeichnet, daß die Säurekomponente so beigemischt wird, daß sie in einer Menge von mindestens 2 Gew.-% pro Volumen enthalten ist.

4. Verfahren nach Anspruch 3, dadurch gekennzeichnet, daß die Säure so beigemischt wird, daß sie in einer Menge von 2 bis 6 Gew.% pro Volumen enthalten ist.

5. Verfahren nach Anspruch 4, dadurch gekennzeichnet, daß die Säurekomponente so beigemischt wird, daß sie in einer Menge von ungefähr 3 Gew.% pro Volumen enthalten ist.

6. Verfahren nach einem der vorhergehenden Ansprüche, dadurch gekennzeichnet, daß das iodhältige Germizid ein Iodophor ist.

7. Verfahren nach Anspruch 6, dadurch gekennzeichnet, daß das Iodophor Polyvinylpyrrolidon-Iod ist.

8. Verfahren nach Anspruch 6, dadurch gekennzeichnet, daß das Iodophor eine Kombination aus Iod und einer Detergentverbindung ist.

9. Verfahren nach einem der vorhergehenden Ansprüche, dadurch gekennzeichnet, daß die säurehaltige Zusammensetzung einen pH-Wert von nicht mehr als 3 hat.

## Revendications pour les E'tats Contractants: BE, FR, DE, GB, IT, LU, NL, SE, CH, LI

1. Composition germicide pour utilisation en présence de matière bio-organique et comprenant un germicide organique contenant de l'iode, caractérisée en ce qu'elle contient une quantité stabilisante d'un constituant acide qui est l'acide maléique, ou l'acide maléique ensemble avec de l'acide chlorhydrique et/ou de l'acide phosphorique.

**0 079 782**

2. Composition selon la revendication 1, caractérisée en ce qu'elle est sous la forme d'une solution aqueuse.

3. Composition selon la revendication 1 ou la revendication 2, caractérisée en ce que le constituant acide est présent sous une quantité d'au moins 2% en volume.

4. Composition selon la revendication 3 caractérisée en ce que l'acide est présent sous une quantité de 2 à 6% en poids/volume.

5. Composition selon la revendication 4 caractérisée en ce que le constituant acide est présent en quantité d'environ 3% en poids/volume.

6. Composition selon l'une quelconque des revendications précédentes, caractérisée en ce que le germicide contenant de l'iode est un iodophore.

7. Composition selon la revendication 6 caracterisée en ce que l'iodophore est la polyvinyl-pyrrolidone-iode.

8. Composition selon la revendication 6 caractérisée en ce que l'iodophore est une combinaison d'iode et d'un composé détergent.

9. Composition selon l'une quelconque des revendications précédentes, caractérisée en ce qu'elle a un pH non supérieur à 3.

10. Procédé pour recueillir de façon stérile un exsudat corporel dans un récipient collecteur de drainage, qui consiste à introduire dans ce récipient une composition selon l'une quelconque des revendications précédentes.

11. Procédé selon la revendication 10, dans lequel l'exsudat corporel est l'urine.

**Revendications pour l'Etat Contractant: AT**

1. Procédé pour la préparation d'une composition germicide pour utilisation en présence de matière bio-organique, et comprenant un germicide organique contenant de l'iode, caractérisé en ce qu'il consiste à ajouter au germicide une quantité stabilisante d'un constituant acide qui est l'acide maléïque, ou l'acide maléïque ensemble avec de l'acide chlorhydrique et/ou de l'acide phosphorique.

2. Procédé selon la revendication 1, caractérisé en ce que la composition est sous la forme d'une solution aqueuse.

3. Procédé selon la revendication 1 ou la revendication 2, caractérisé en ce que l'on ajoute le constituant acide de façon qu'il soit présent sous une quantité d'au moins 2% en volume.

4. Procédé selon la revendication 3, caractérisé en ce que l'on ajoute l'acide de façon qu'il soit présent sous une quantité de 2 à 6% en poids/volume.

5. Procédé selon la revendication 4, caractérisé en ce que l'on ajoute le constituant acide de façon qu'il soit présent sous une quantité d'environ 3% en poids/volume.

6. Procédé selon l'une quelconque des revendications précédentes, caractérisé en ce que le germicide contenant de l'iode est un iodophore.

7. Procédé selon la revendication 6, caractérisé en ce que l'iodophore est la polyvinylpyrrolidone-iode.

8. Procédé selon la revendication 6, caractérisé en ce que l'iodophore est une combinaison d'iode et d'un composé détergent.

9. Procédé selon l'une quelconque des revendications précédentes, caractérisé en ce que la composition contenant de l'acide a un pH non supérieur à 3.

13